# EUROPEAN PATENT SPECIFICATION

(11) **EP 2 048 731 B1**
(45) Date of publication and mention of the grant of the patent: **25.08.2010**
(21) Application number: 08017822.1
(22) Date of filing: 10.10.2008
(51) Int. Cl.: H01M 8/02

(54) **Resin composition for fuel cell separator and fuel cell separator manufactured therefrom**
Harzzusammensetzung für Brennstoffzellenseparator und daraus hergestellter Brennstoffzellenseparator
Composition de résine pour séparateur de pile à combustible et séparateur de pile à combustible fabriqué à partir de cette composition

(30) Priority: 11.10.2007 JP 2007265452; 03.10.2008 JP 2008258300
(43) Date of publication of application: 15.04.2009
(73) Proprietor: Nichias Corporation, Tokyo 105-8555 (JP)
(72) Inventor: Murakami, Atsushi, Hamamatsu-shi Shizuoka (JP); Shimizu, Takayoshi, Hamamatsu-shi Shizuoka (JP)
(74) Representative: Grünecker, Kinkeldey, Stockmair & Schwanhäusser Anwaltssozietät

(56) References cited:
- EP-A- 1 686 638
- US-A1- 2003 235 750
- US-A1- 2006 240 303

## Description

### FIELD OF THE INVENTION

The present invention relates to a fuel cell separator and a resin composition for fuel cell separator which is a molding material therefor.

### BACKGROUND OF THE INVENTION

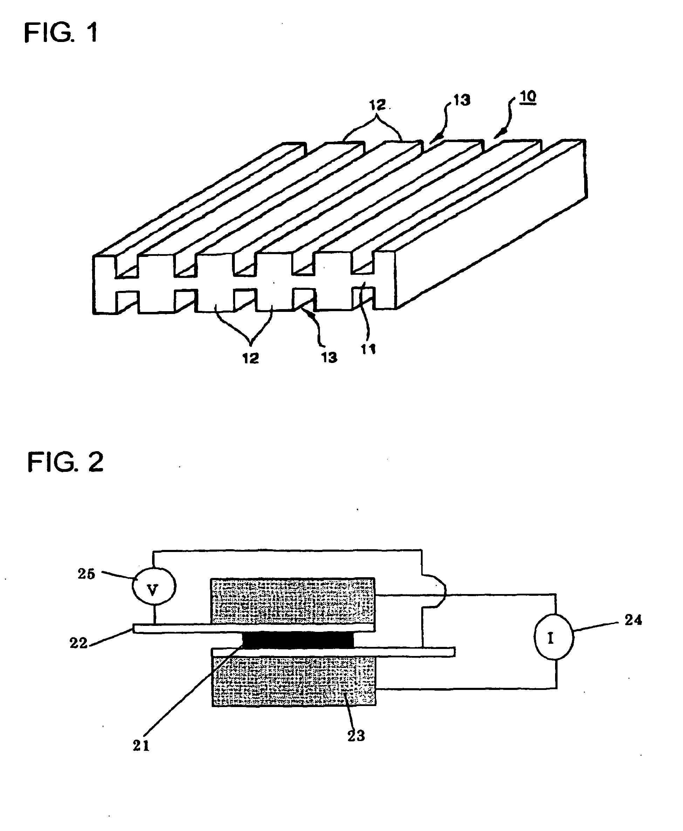

As shown by, for example, a schematic perspective view in Fig. 1, a fuel cell separator 10 is formed by providing a plurality of partition walls 12 in a protruding state at predetermined intervals on both sides of a flat plate portion 11. In order to form a fuel cell, a number of fuel cell separators 10 are laminated along the protruding direction (the vertical direction in Fig. 1) of the partition walls 12. This lamination allows a reactive gas (hydrogen or oxygen) to flow through channels 13 formed by pairs of adjacent partition walls 12. The fuel cell separator is produced by molding a resin composition containing a resin material and a conductive material such as graphite into the shape as described above.

As a method for forming the fuel cell separator, there is generally used a method in which the above-mentioned resin composition containing a thermosetting resin such as a phenol resin or an epoxy resin as the resin material is placed in a mold provided with flow paths for gas or cooling water, and molded by heat compression molding in which the composition is hot pressed. However, in recent years, in order to improve productivity, attempts have been made to produce the fuel cell separator by injection molding in place of heat compression molding. For example, there is known a method of injecting a resin composition containing a graphite material and a thermoplastic resin or a thermosetting resin into a mold from a cylinder, thereby forming a fuel cell separator (see Patent Documents 1 to 3). In such injection molding, the resin composition is transferred to a closed mold through a narrow passage called a runner. When the resin composition has low fluidity, a short cut in which a part of the mold cannot be filled may occur, or high pressure is required for filling, so that the inner pressure of a mold increases to cause deformation of the mold, leading to deterioration of dimensional accuracy of a molded article, in some cases. For this reason, in order to fill the mold without clearance with the resin composition to obtain a fuel cell separator having high dimensional accuracy, the resin composition is required to have high fluidity.

Referring to a resin which is one of main raw materials of a fuel cell separator resin composition, a phenol resin or an epoxy resin is widely used. However, only a fuel cell separator having low conductivity is obtained from a phenol resin or an epoxy resin containing a combination of general kinds and amounts of a curing agent and a curing accelerator.

Referring to a carbon material which is also one of main raw materials of a fuel cell separator resin composition, graphite is widely used. The graphite has a hexagonal network plane crystal structure, and electricity is willing to flow in the crystal plane. Therefore, graphite having higher crystallinity in which crystals are developed shows better conductivity. However, graphite crystal has weak bonding in the direction vertical to plane, which links a crystal plane and a crystal plane, and the crystal plane itself has poor reactivity. From those facts, crystal plane tends to trigger a breakage of a fuel cell separator through generation of peeling between crystal planes or interfacial fracture on the crystal plane with a resin material. When high crystalline artificial graphite and natural graphite are used as a carbon material, a fuel cell separator having high conductivity is obtained, but its strength is low. Additionally, natural graphite contains much impurities of metal components contained in graphite, and this may adversely affect an electrolyte membrane constituting a fuel cell.

As described above, a fuel cell separator resin composition having excellent conductivity, strength and fluidity and containing little impurities has not been obtained by the conventional techniques.

Patent Document 1: JP-A-2003-338294
Patent Document 2: JP-A-2003-297386
Patent Document 3: JP-A-2003-242994

### SUMMARY OF THE INVENTION

The present invention has been made in view of the above-mentioned circumstances, and an object thereof is to provide a fuel cell separator resin composition having excellent conductivity and fluidity and containing little impurities. Another object of the present invention is to provide a fuel cell separator having excellent conductivity and dimensional accuracy and being accompanied with no fair of causing deterioration in performance of a solid electrolyte.

The problem is solved by appended claim 1-6.

Since the carbon material comprises low-crystalline artificial graphite as its main component, the fuel cell separator resin composition of the present invention has high strength and contains little impurities, resulting in no fear of causing deterioration in performance of a solid electrolyte. Furthermore, by specifying the curing accelerator to a specific kind or specifying the amount of the curing accelerator to a specific amount, high fluidity can be retained while maintaining conductivity, so that injection molding is possible. Therefore, the fuel cell separator of the present invention has excellent dimensional accuracy, strength and conductivity, and does not lead to deterioration in performance of a solid electrolyte. Thus, a high performance fuel cell is obtained.

### BRIEF DESCRIPTION OF THE DRAWINGS

Fig. 1 is a perspective view showing one embodiment of a fuel cell separator.
Fig. 2 is a schematic view illustrating a method for measuring the resistance in a penetrating direction.

The reference numerals used in the drawings denote the following, respectively.
- 10:: Fuel cell separator
- 11:: Flat plane portion
- 12:: Partition walls
- 13:: Channels
- 21:: Sample
- 22:: Carbon paper
- 23:: Electrode
- 24:: Ammeter
- 25:: Voltmeter

### DETAILED DESCRIPTION OF THE INVENTION

The present invention is described in detail below.

The resin composition for fuel cell separator (hereinafter simply referred to as a "resin composition") of the present invention comprises (A) an epoxy resin, (B) a curing agent, (C) a curing accelerator and (D) a carbon material as essential components.

The epoxy resin is a compound having two or more epoxy groups, and conventionally known compounds can be used. Examples of the epoxy resin include bisphenol type epoxy resins such as a bisphenol A type epoxy resin, a bisphenol F type epoxy resin, a bisphenol AF type epoxy resin, a bisphenol S type epoxy resin, a hydrogenated bisphenol A type epoxy resin and a halogenated bisphenol A type epoxy resin; multifunctional epoxy resins such as a phenol novolak type epoxy resin, a cresol novolak type epoxy resin, a bisphenol A novolak type epoxy resin, a tris-hydroxyphenylmethane type epoxy resin, a phenol dicyclopentadiene type epoxy resin, a halogenated phenol novolak type epoxy resin, a naththol novolak type epoxy resin, resorcin epoxide and a tetraphenylolethane type epoxy resin; alicyclic epoxy resins; biphenyl type epoxy resins; naphthalene type epoxy resins; glycidyl ester type epoxy resins and glycidyl amine type epoxy resins. However, the epoxy resin is not limited to those. Of those epoxy resins, the multifunctional epoxy resins are preferably used in the present invention for the reason that a molded article having high heat resistance and strength is obtained. The epoxy equivalent is preferably from 50 to 500, and more preferably from 100 to 300. Where the epoxy equivalent is too low, the resulting molded article becomes brittle. On the other hand, where the epoxy equivalent is too high, only a molded article having low heat resistance and strength is obtained.

The epoxy resin reacts with the curing agent to form an epoxy-cured product. Various known compounds can be used as the curing agent. Examples of the curing agent include aliphatic, alicyclic and aromatic polyamines such as diethylenetriamine, triethylenetetramine, tetraethylenepentamine, menthenediamine, isophoronediamine, N-aminoethylpiperazine, m-xylenediamine and diaminodiphenylmethane, or carbonates thereof; acid anhydrides such as phthalic anhydride, methyltetrahydrophthalic anhydride, methylhexahydrophthalic anhydride, methylnadic anhydride, dodecylsuccinic anhydride, pyromellitic anhydride, benzophenonetetracarboxylic anhydride, trimellitic anhydride and polyazelaic anhydride; polyphenols such as phenol novolak and cresol novolak; and polymercaptan. However, the curing agent is not limited to those. A plurality of the curing agents can be used in combination. Of the above-mentioned curing agents, curing agents such as polyamines or carbonates thereof, acid anhydrides, polyphenols and polymercaptan are called a polyaddition type curing agent, because they themselves react with an epoxy compound by polyaddition reaction to constitute the epoxy-cured product. An excess or deficiency of the polyaddition type curing agent leads to the remaining of unreacted functional groups, and therefore, the amount thereof added has an appropriate range. In general, the polyaddition type curing agent is preferably used in an amount of from 0.8 to 1.2 equivalent weight, and particularly from 0.9 to 1.1 equivalent weight, per epoxy group of an epoxy resin precursor. The curing rate of the thermosetting resin can arbitrarily be changed by variously selecting the kind and amount of those curing agents, the kind of thermosetting resin and the kind and amount of the curing accelerator. Once skilled in the art will easily determine the kinds and amounts of thermosetting resin, curing agent and curing accelerator used in accordance with the intended curing conditions. In the present invention, a compound having two or more phenolic hydroxyl groups is preferred as the curing agent. Examples of such a compound include the above-mentioned polyphenols and bisphenol A, such as phenol novolak, cresol novolak, bisphenol A novolak, aralkyl type phenol novolak, a triphenylmethane type phenol resin, a terpenephenol resin, naphthol novolak and a phenol dicyclopentadiene resin. Those curing agents having two or more phenolic hydroxyl groups can provide a molded article having high heat resistance.

One of the epoxy resin and the curing agent used must have a softening temperature in a specific range. The softening temperature used herein is measured according to the method defined in JIS K7234, a ring and ball method. In general, an epoxy resin and a curing agent, having high softening temperature have high molecular weight, and as a result, viscosity during melting tends to increase. Therefore, where the softening temperature is too high, compound viscosity becomes high, resulting in decreasing dimensional accuracy of a fuel cell separator, and making it impossible to ensure fluidity necessary for injection molding. On the other hand, where the softening temperature is too low, such troubles may happen that reverse flow (also called backflow) occurs in a cylinder during injection molding, making it impossible to fill in cavities of a mold, and that roughly ground compound particles are fused in a hopper of an injection molding machine, resulting in not being tangled with a screw. Therefore, the softening temperature of the epoxy resin or the curing agent has a preferred range. The softening temperature of the epoxy resin or the curing agent in the present invention is preferably from 40 to 90°C, more preferably from 50 to 85°C, and still more preferably from 55 to 80°C.

The matter to be considered in selection of the kind and amount of the curing accelerator (C) is that curing reaction of an epoxy resin is difficult to occur in a temperature region of about 100°C or lower which is assumed as a kneading temperature or a cylinder temperature during injection molding, that is, heat stability is high. A fuel cell separator having high conductivity is obtained by selecting the kind and amount of the curing accelerator from such a standpoint. The result of consideration on this reason is described hereinafter. In addition to this, the preferred characteristics are that a curing reaction rate is fast at a temperature of about 150°C or higher which is assumed as a mold temperature, and reaction initiates rapidly after passing a derivation period of a certain time from the initiation of filling a material into a mold. Molding time can be shortened, and additionally, a material can be filled before initiation of a curing reaction. As a result, filling pressure becomes low, resulting in improvement of dimensional accuracy of a molded article. The kind and amount of the preferred curing accelerator are specifically described below.

A phosphine compound represented by the following formula (I) or a phosphonium compound represented by the following formula (II), having a molecular weight of from 300 to 1,000 is used as the curing accelerator.

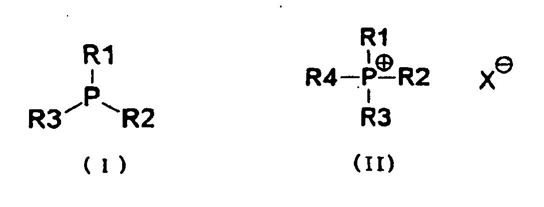

wherein R1 to R4 which may be the same or different each represent a functional group selected from hydrogen, an alkyl group, an aralkyl group and an aryl group, or their derivatives; and X is a substance selected from a four-coordinated boron compound, a halogen atom and a six-coordinated antimony compound.

The phosphorus compound having a molecular weight of from 300 to 1,000 is not particularly limited. Examples of the phosphorus compound include tri-o-tolylphosphine (molecular weight: 304), tri-p-tolylphosphine (molecular weight: 304), tri-m-tolylphosphine (molecular weight: 304), tribenzylphosphine (molecular weight: 304), tris(p-methoxyphenyl)phosphine (molecular weight: 352), tris(p-tert-butoxyphenyl)phosphine (molecular weight: 479), tri-2,4-quinolylphosphine (molecular weight: 346), tri-2,5-quinolylphosphine (molecular weight: 346), tri-3,5-quinolylphosphine (molecular weight: 346), tri-n-octylphosphine (molecular weight: 371), tetrabutylphosphonium bromide (molecular weight: 339), tetraphenylphosphonium bromide (molecular weight: 419), methyl(triphenyl)phosphonium bromide (molecular weight: 357), methyl(triphenyl)phosphonium chloride (molecular weight: 313), ethyl(triphenyl)phosphonium bromide (molecular weight: 371), n-propyltriphenylphosphonium bromide (molecular weight: 371), n-butyltriphenylphosphonium bromide (molecular weight: 399), methoxymethyltriphenylphosphonium chloride (molecular weight: 343), benzyltriphenylphosphonium chloride (molecular weight: 389), 2-carboxyltriphenylphosphonium bromide (molecular weight: 415), benzyltriphenylphosphonium hexafluoroantimonate (molecular weight: 584), tetraphenylphosphonium tetraphenyl borate (molecular weight: 659), tetraphenylphosphonium tetra-p-tolyl borate (molecular weight: 715), benzylphenylphosphonium tetraphenyl borate (molecular weight: 672), tetraphenylphosphonium tetrafluoroborate (molecular weight: 426) and p-tolyltriphenylphosphonium tetra-p-tolyl borate (molecular weight: 728). However, the phosphorus compound is not limited to those.

As the above phosphorus compounds, when a compound having a large molecular weight is used, a resin composition having high heat stability can be obtained. However, where the molecular weight is extremely high, there is the problem that curing reaction is slow, and it is necessary to conduct the curing reaction at high temperature, resulting in deterioration of molding cycle and heat decomposition of an epoxy resin and a curing agent during the curing reaction. Therefore, the molecular weight of the phosphorus compound used in the present invention has a preferred range. The molecular weight of the phosphorus compound used in the present invention is from 300 to 1,000, preferably 500 to 800, and still more preferably from 600 to 750.

As the phosphorus compound, one containing an aromatic ring, specifically a compound wherein at least one of R1 to R4 in the above formula (I) or (II) is an aralkyl group, an aryl group or a derivative thereof, and a salt of the four-coordinated boron compound in the formula (II) are particularly preferred because they have high heat stability in a temperature region of about 100°C or lower and have high curing reaction rate at a temperature of about 150°C or higher. Of the phosphorus compounds satisfying those conditions, tetraphenylphosphonium tetraphenyl borate and tetraphenylphosphonium tetra-p-tolyl borate are easily available, and have high heat stability in a temperature region of about 100°C or lower and high curing reaction rate at a temperature of about 150°C or higher, and therefore are preferred in the present invention. Those phosphorus compounds are generally commercially available, and can easily be available.

In the present invention, a salt of a diazabicyclo compound and an organic acid is also preferred as the curing accelerator. The diazabicyclo compound is not particularly limited, and examples thereof include 1,8-diazabicyclo(5,4,0)undecene-7 (abbreviated to DBU), 1,5-diazabicyclo(4,3,0)nonene-5 (abbreviated to DBN) and 6-dibutylamino-1,8-diazabicyclo(5,4,0)undecene-7. However, the diazabicyclo compound is not limited to those. Above all, 1,8-diazabicyclo(5,4,0)undecene-7 is inexpensive, is easily available, has high stability and is difficult to volatilize, and therefore is a preferred diazabicyclo compound in the present invention.

Examples of the organic acid include orthophthalic acid (an aromatic multivalent organic acid, acid dissolution constant: 2.95), isophthalic acid (an aromatic multivalent organic acid, acid dissolution constant: 3.48), terephthalic acid (an aromatic multivalent organic acid, acid dissolution constant: 3.54), trimesic acid (an aromatic multivalent organic acid, acid dissolution constant: 3.13), formic acid (acid dissolution constant: 3.55), acetic acid (acid dissolution constant: 4.76), phenol ((an aromatic organic acid, acid dissolution constant: 9.89), benzoic acid (an aromatic organic acid, acid dissolution constant: 4.00), salicylic acid (an aromatic organic acid, acid dissolution constant: 2.75), oxalic acid (a multivalent organic acid, acid dissolution constant: 1.27), cinnamic acid (acid dissolution constant: 4.44), tartaric acid (a multivalent organic acid, acid dissolution constant: 3.04), lactic acid (acid dissolution constant: 3.86), and phenol novolak (a multivalent organic acid, acid dissolution constant: unknown). However, the organic acid is not limited to those. Furthermore, the organic acid is incorporated into the epoxy resin during curing reaction. Therefore, the organic acid having a more inflexible molecular structure and a larger number of reaction sites with the epoxy resin can provide a molded article having higher heat resistance and strength. For this reason, the aromatic organic acid having an inflexible structure and the multivalent organic acid having many reaction sites with the epoxy resin are preferred.

The salt of the diazabicyclo compound and the organic acid dissociates into the diazabicyclo compound and the organic acid upon heating, and the dissociated diazabicyclo compound acts as the curing accelerator. Accordingly, when the temperature at which the salt of the diazabicyclo compound and the organic acid dissociates is high, a resin composition having high heat stability is obtained. The dissociation temperature is proportional to the strength of the organic acid. When the organic acid is strong, the resin composition having high heat stability can be obtained. However, when the organic acid is extremely strong, the salt of the diazabicyclo compound and the organic acid is hydrolyzed by deliquescence of the organic acid to rather decrease heat stability. Furthermore, when an extremely strong organic acid is used, a mixing apparatus or a molding apparatus is corroded in some cases. The strength of an acid is represented by the acid dissolution constant (pKa), and the smaller acid dissolution constant shows the stronger acidity. Accordingly, the acid dissolution constant of the organic acid used in the present invention has a preferred range. The acid dissolution constant of the organic acid used in the present invention is preferably from 0 to 10, and more preferably from 2 to 4. For example, a strong acid such as sulfuric acid or hydrochloric acid is unfavorable, though it depends on the concentration thereof, because the acid dissolution constant thereof sometimes takes a negative value less than 0. Furthermore, when the aromatic organic acid or the multivalent organic acid is used as the organic acid, the molded article having high heat resistance and strength is obtained. For example, orthophthalic acid, isophthalic acid, terephthalic acid and trimesic acid have appropriate acid dissolution constants and also are aromatic multivalent organic acids, so that the resin composition having particularly excellent heat stability, strength and heat resistance can be obtained. The acid dissolution constant in the present invention indicates the first-step acid dissolution constant (pKa1) in the case of the multivalent organic acid.

The salt of the diazabicyclo compound and the organic acid can be produced by the methods which have hitherto been known. For example, the salt can be produced by dissolving the diazabicyclo compound and the organic acid in a solvent and mixing, or stirring at a temperature equal to or higher than the melting point of the organic acid. However, the production method is not limited to this method. When the salt of the diazabicyclo compound and the organic acid is produced, stirring and mixing are preferably performed in an atmosphere of nitrogen such that the diazabicyclo compound and the organic acid are not deteriorated by oxidation.

As for the mixing ratio of the diazabicyclo compound and the organic acid, when the ratio of the organic acid is high, the resin composition having high heat stability can be obtained. However, when the ratio of the organic acid is extremely high, the curing reaction becomes slow, or the curing reaction is required to be conducted at high temperature. This gives rise to the problem on decrease in molding cycle and heat decomposition of the epoxy resin and the curing agent during the curing reaction. On the other hand, where the ratio of the organic acid is low, the resin composition is impaired in heat stability. In the present invention, the amount of the organic acid is preferably from 10 to 2,000 parts by mass, more preferably from 50 to 500 parts by mass, and still more preferably from 80 to 120 parts by mass, based on 100 parts by mass of the diazabicyclo compound.

Furthermore, as the salt of the diazabicyclo compound and the organic acid, commercially available products may be used.

A urea derivative represented by the formula: X-NH-CO-NYZ, wherein X is one member selected from a saturated or unsaturated alkyl group, a derivative thereof, an aryl group and a derivative thereof; and Y and Z which may be the same or different represent a saturated or unsaturated alkyl group, is preferred as the curing accelerator. Above all, alkyl type urea derivatives represented by the following formulae (III) to (V) are preferred.

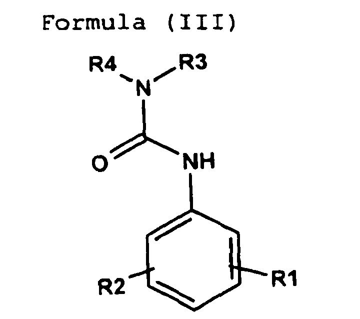

wherein R1 and R2 which may be the same or different each represent hydrogen, halogen, a lower alkyl group, a lower alkoxy group or a nitro group; and R3 and R4 which may be the same or different each represent a lower alkyl group.

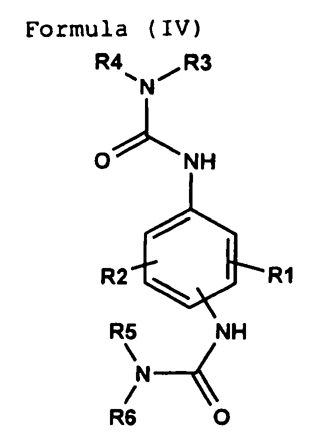

wherein R1 and R2 which may be the same or different each represent hydrogen, halogen, a lower alkyl group, a lower alkoxy group or a nitro group; and R3, R4, R5 and R6 which may be the same or different each represent a lower alkyl group.

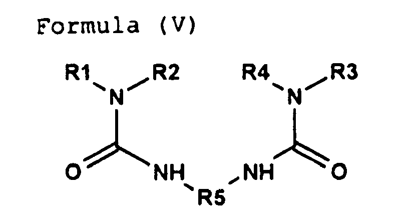

wherein R1, R2, R3 and R4 which may be the same or different each represent a lower alkoxy group; and R5 represents an aliphatic hydrocarbon or a derivative thereof.

In the above alkyl type urea derivatives, the lower alkyl group or the lower alkoxy group for R3 and R4 in the formula (III), R3 to R6 in the formula (IV) and R1 to R4 in the formula (V) is preferably methyl group, ethyl group, propyl group, or butyl group, or the corresponding alkoxy group.

Specific examples of the alkyl type urea derivative represented by the formula (III) include 3-phenyl-1,1-urea, 3-(p-chlorophenyl)-1,1-urea, 3-(3,4-dichlorophenyl)-1,1-urea, 3-(o-methylphenyl)-1,1-urea, 3-(p-methylphenyl)-1,1-urea, 3-(methoxyphenyl)-1,1-urea and 3-(nitrophenyl)-1,1-urea.

Specific examples of the alkyl type urea derivative represented by the formula (IV) include 1,1'-phenylenebis(3,3-urea) and 1,1'-(4-methyl-m-phenylene)-bis(3,3-urea).

Specific example of the alkyl type urea derivative represented by the formula (V) includes N,N"-(1,5,5-trimethyl-1,3-cyclohexanesil)bis[N',N'-trimethylurea].

Of the above compounds, the following (a) to (c) are particularly preferred. Those are commercially available, and can easily be available.

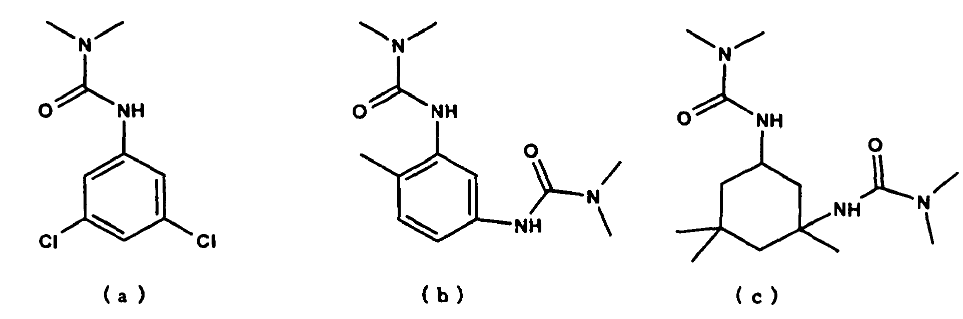

When the above alkyl type urea derivatives are used, the resin composition having high heat stability in a temperature region of about 100°C or lower and having high curing reaction rate at a temperature of about 150°C or higher can be obtained.

An imidazole compound having a molecular weight of 100 or more is preferred as the curing accelerator. The imidazole compound is a compound containing imidazole represented by the following chemical formula.

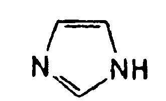

Examples of the imidazole compound having a molecular weight of 100 or more used in the present invention include 2-undecylimidazole (molecular weight: 224), 2-heptadecylimidazole (molecular weight: 307), 2-ethyl-4-methylimidazole (molecular weight: 110), 2-phenylimidazole (molecular weight: 144), 2-phenyl-4-imidazole (molecular weight: 158), 1-benzyl-2-methylimidazole (molecular weight: 172), 1-benzyl-2-phenylimidazole (molecular weight: 234), 1-cyanoethyl-2-methylimidazole (molecular weight: 135), 1-cyanoethyl-2-ethyl-4-methylimidazole (molecular weight: 163), 1-cyanoethyl-2-undecylimidazole (molecular weight: 275), 1-cyanoethyl-2-phenylimidazole (molecular weight: 197), 1-cyanoethyl-2-undecylimidazolium trimellitate (molecular weight: 486), 1-cyanoethyl-2-phenylimidazolium trimellitate (molecular weight: 407), 2,4-diamino-6-[2'-methylimidazolyl-(1')]-ethyl-s-triazine (molecular weight: 219), 2,4-diamino-6-[2'-undecylimidazolyl-(1')]-ethyl-s-triazine (molecular weight: 360), 2,4-diamino-6-[2'-ethyl-4'-methylimidazolyl-(1')]-ethyl-s-triazine (molecular weight: 247), 2,4-diamino-6-[2'-methylimidazolyl-(1')]-ethyl-s-triazine isocyanuric acid adduct (molecular weight: 384), 2-phenylimidazole isocyanuric acid adduct (molecular weight: 273), 2-methylimidazole isocyanuric acid adduct (molecular weight: 588), 2-phenyl-4,5-dihydroxymethylimidazole (molecular weight: 204), 2-phenyl-4-methyl-5-hydroxymethylimidazole (molecular weight: 188) and 2,3-dihydro-1H-pyrrolo[1,2-a]benzimidazole (molecular weight: 158). However, the imidazole compound is not limited to those.

When the imidazole compound having high molecular weight is used, the resin composition having high heat stability can be obtained. However, when the molecular weight is extremely high, there is the problem that curing reaction is slow, and it is necessary to conduct the curing reaction at high temperature, resulting in decrease of molding cycle and heat decomposition of an epoxy resin and a curing agent during the curing reaction. Therefore, the molecular weight of the imidazole compound used in the present invention has a preferred range. The molecular weight of the imidazole compound used in the present invention is from 100 to 500, preferably from 120 to 300, and still more preferably from 150 to 250. The imidazole compound preferably contains oxygen. When the imidazole containing oxygen is used, the composition in which the curing reaction is hard to proceed during melt kneading is obtained. Of the above imidazoles, 2-phenyl-4,5-dihydroxymethylimidazole and 2-phenyl-4-methyl-5-hydroxymethylimidazole correspond to such an imidazole compound.

A tertiary amine compound having a molecular weight of from 120 to 1,000 is preferred as the curing accelerator. The tertiary amine compound having a molecular weight of from 120 to 1,000 is not particularly limited. Examples of the tertiary amine compound include trisdimethylaminomethylphenol (molecular weight: 265), N,N-dimethylcyclohexylamine (molecular weight: 127), tri-n-butylamine (molecular weight: 185), bis(p-aminohexyl)methane (molecular weight: 210), tetramethyl-1,3-diaminopropane (molecular weight: 130), N,N-dimethylcyclohexylamine (molecular weight: 127), N-ethyl(cyclohexyl)amine (molecular weight: 127), 3-dimethylaminophenol (molecular weight: 137), triphenylamine (molecular weight: 245), tridecylamine (molecular weight: 522), bis[(2-dimethylamino)ethyl]ether (molecular weight: 160), benzyldimethylamine (molecular weight: 137) and N,N-dimethylbenzylamine (molecular weight: 135). However, the tertiary amine compound is not limited to those. Furthermore, compounds obtained by adducting (prepolymerizing) an amine compound, such as an epoxy amine adduct obtained by prepolymerization utilizing addition reaction between an amine compound such as dialkylamine, and an epoxy resin, can also be used.

The amine compound has non-covalent ion pair on nitrogen atom, and this promotes reaction between an epoxy resin and the curing agent. Electron density of nitrogen atom increases as the number of hydrocarbon or hydrocarbon derivative bonded to nitrogen increases, resulting in increase of action as the curing accelerator. The number of the hydrocarbon bonded to nitrogen is amine series. Therefore, a tertiary amine has the strongest action as the curing accelerator in the whole amine compounds.

When the amine compound having high molecular weight is used, the resin composition having high heat stability can be obtained. However, when the molecular weight is extremely high, there is the problem that curing reaction is slow, and it is necessary to conduct the curing reaction at high temperature, resulting in decrease of molding cycle and heat decomposition of an epoxy resin and a curing agent during the curing reaction. Furthermore, when the molecular weight is too low, disadvantage may involve that the amine compound causes the problem in heat stability, or the amine compound vaporizes to disappear. Accordingly, the molecular weight of the tertiary amine compound used in the present invention has a preferred range. The molecular weight of the tertiary amine compound used in the present invention is from 120 to 1,000, preferably from 200 to 500, and more preferably from 250 to 400.

Of the amino compounds, compounds containing an aromatic ring has high reaction rate at a specific temperature or higher despite high heat stability, and is therefore particularly preferred. Of the compounds satisfying this condition, trisdimethylaminomethylphenol shown below is easily available, provides a compound having high heat stability, and is therefore a preferred tertiary amine compound in the present invention.

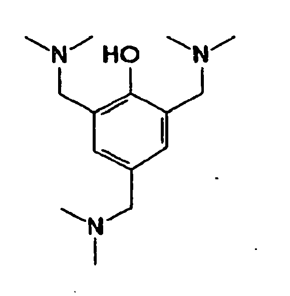

When the amount of the curing accelerator used is too large, curing can be performed in a short period of time, and molding cycle is shortened, which is preferred. However, conductivity deteriorates for the reason described hereinafter. On the other hand, when the amount of the curing accelerator used is too small, conductivity is improved, but there is the problem that molding cycle is prolonged. Accordingly, the amount of the curing accelerator used has a preferred range. The amount of the curing accelerator used is from 0.01 to 10 parts by mass, preferably from 0.1 to 7 parts by mass, more preferably from 0.5 to 5 parts by mass, and still more preferably from 1 to 3 parts by mass, per 100 parts by mass of the curing agent. When the amount of the curing accelerator used is fallen within this range, the composition having excellent balance between conductivity and molding cycle is obtained.

The carbon material (D) is preferably low crystalline artificial graphite. The low crystalline artificial graphite is called isotropic graphite, is a graphite material having isotropic structure and characteristics, and is generally produced by, for example, cold isotropic pressing method (CIP method). The molded powder is isotropically molded by CIP molding according to the conventional method, and the resulting molded article is burned and carbonized at a temperature of from about 800 to 1,500°C in a non-oxidizing atmosphere, and is further subjected to graphitization by heat treatment at a temperature of from about 2,000 to 2,900°C, thereby a low crystalline graphite material having high density and high strength is produced.

Furthermore, the low crystalline artificial graphite means artificial graphite having a wide graphite plane distance. The graphite plane distance used herein is an index for representing a crystalline state of the graphite, and the smaller value indicates a crystal more developed. The perfect crystal of graphite has a graphite plane distance of 0.3354 nm. The general graphite materials have a value larger than this value. Graphite crystal takes a configuration of a hexagonal net-like plane, and the graphite with developed crystals becomes a state in which spreading in a crystal plane direction is large, and lamination in a longitudinal direction is dense. The graphite plane distance is a value measured with the distance between the planes of the graphite crystals averaged.

The graphite crystal has weak bonding in the direction vertical to the planes, which links crystal plane and crystal plane, and the crystal plane itself is poor in reactivity. Therefore, the crystal plane tends to trigger a breakage of a separator composition through peeling between crystal planes and interfacial fracture on the crystal plane with a resin material. When the low crystalline artificial graphite is simply used as the carbon material, conductivity deteriorates. However, in the present invention, the deterioration is prevented by using a specific curing accelerator. The graphite crystal flows well in a direction parallel to the hexagonal net-like crystal plane, but is difficult to flow in a perpendicular direction. Accordingly, one having a large crystal plane is improved in conductivity. The same applies to a resin composition obtained by mixing graphite and a resin, and one using the graphite in which crystals have grown is improved in conductivity. Accordingly, from the standpoints of conductivity and strength, the crystal plane distance has a preferred range. The preferred range in the present invention is from 0.3362 to 0.3390 nm, the more preferred range is from 0.3364 to 0.3375 nm, and the still more preferred range is from 0.3365 to 0.3370 nm.

The graphite crystal distance is measured by XRD (X-ray diffraction), and calculated from the angle (2θ) at which a peak of a 002 plane as a basal plane is confirmed. Specifically, it is calculated by the Bragg equation: λ=2d·sinθ, wherein d is the plane distance, θ is 1/2 of the peak angle, and λ is the wavelength of an optical system of an XRD apparatus. A method for calculating the plane distance from the results measured by XRD is known information which can easily be analogized by one skilled in the art who handles inorganic materials.

One having an average particle diameter in a specific range is preferably used as the low crystalline artificial graphite. When the average particle diameter is too small, compound viscosity increases, and as a result, dimensional accuracy of a fuel cell separator decreases, and fluidity necessary for injection molding cannot be ensured. On the other hand, when the average particle diameter is too large, graphite particles cannot pass through a thin-walled portion in a mold cavity due to interference between the mold cavity and the graphite particles. As a result, the phenomenon (short shot) in which a resin composition cannot be filled in a mold cavity may occur as same as in the case that the average particle diameter is too small. The preferred average particle diameter range in the present invention is from 60 to 500 µm, the more preferred range is from 70 to 300 µm, and the still more preferred range is from 80 to 150 µm.

Almost all of the low crystalline artificial graphite powders generally commercially available have an average particle diameter of from 50 to 100 µm. Those generally have a certain particle size distribution, and contain particles having a particle diameter exceeding 100 µm. Therefore, the low crystalline artificial graphite having the above average particle diameter may be obtained by obtaining the powder having the greatest average particle diameter in the commercially available products and classifying the same. Furthermore, the commercially available molded article of the low crystalline graphite may be pulverized.

The carbon material may be entirely composed of the low crystalline artificial graphite, or may be used in combination with other carbon material. Specifically, the ratio of the low crystalline artificial graphite in the whole carbon material is preferably from 5 to 100% by mass, more preferably from 50 to 100% by mass, still more preferably from 70 to 100% by mass, and particularly preferably from 80 to 100% by mass. When the ratio of the low crystalline artificial graphite is low, mechanical strength decreases.

Examples of the carbon material that can be used in combination include expanded graphite, artificial graphite, natural graphite, carbon black, carbon fiber, carbon nanotube, diamond-like carbon, fullerene, carbon nanohorn, hard carbon and glass-like carbon. However, the carbon material is not limited to those. Of those, natural graphite is a naturally occurring carbon material. Therefore, the natural graphite contains metal components such as iron, calcium and sodium in large amounts as natural product-derived impurities. As a result, those promote deterioration of an electrolyte membrane of a fuel cell in some cases, and it is therefore unfavorable to increase the ratio of natural graphite in the resin crude composition of the present invention. Expanded graphite is a graphite material obtained by processing natural graphite, and easily forms conductive paths due to its anisotropy, thereby a composition having excellent conductivity can be obtained. However, because a natural product-derived raw material is used, similar to natural rubber, deterioration of the electrolyte membrane with the metal component is promoted in some cases. Against natural graphite, a carbon material obtained by artificially graphitizing coke or pitch by, for example, heat treatment is called artificial graphite. The kinds of the artificial graphite include needle graphite, low crystalline graphite and high orientational graphite.

The carbon material is required to be from 35 to 85% by mass to the whole amount of the resin composition. When the ratio of the carbon material is too low, conductivity decreases. On the other hand, when the ratio of the carbon material is too high, strength is low and fluidity of the compound decreases. As a result, pressure distribution of the resin composition in the mold during injection molding becomes large, and dimensional accuracy of the fuel cell separator obtained deteriorates, which is unfavorable.

Furthermore, it is possible to add a lubricant such as carnauba wax as an optional component to the resin composition, thereby preventing sticking to the mold or kneader at the time of molding processing. As the lubricant, it is possible to use stearic acid, montanic acid wax or metal salts thereof. It is possible to further add an inorganic filler such as glass fiber, silica, talc, clay or calcium carbonate, an organic filler such as wood flour, or a plasticizer to the extent that does not decrease conductivity.

In the present invention, melt mixing is preferred for the production of the resin composition. The epoxy resin or the curing agent is softened at a temperature equal to or higher than a certain temperature. This temperature at which the epoxy resin or the curing agent is softened is called the softening point. In the present invention, mixing may be performed in an apparatus adjusted to a temperature equal to or higher than the softening point of either the epoxy resin or the curing agent and at which the curing reaction does not proceed during mixing. Specifically, for the epoxy resin or the curing agent described above, the temperature is preferably from 50 to 120°C, more preferably from 70 to 100°C, and still more preferably from 80 to 90°C. Furthermore, the kneading time is preferably from 30 seconds to 5 minutes, and more preferably from 1 to 3 minutes.

In the case of an apparatus which provides a strong shear action, the preset temperature may be a temperature equal to or lower than the softening temperature. In such an apparatus, the temperature of the mixture increases to a temperature equal to or higher than the softening temperature by shear heat generation in some cases. When either the epoxy resin or the curing agent is liquid at normal temperature, mixing may be performed at normal temperature.

As the apparatus used for mixing, various conventional apparatuses can be used. Examples of the apparatus include a non-pressure kneader, a pressure kneader, a twin-screw extruder, a single-screw extruder, a Banbury mixer, an intermixer, a two-roll mill and a three-roll mill, but the apparatus is not limited to those. Furthermore, the material preliminarily mixed by dry mixing may be melt mixed.

According to the above-mentioned melt mixing, mixing can be performed by putting all components in the apparatus at once, and this is advantageous in production cost.

The present invention further provides the fuel cell separator obtained by molding the above-mentioned resin composition. As the molding method, injection molding excellent in productivity is used. In the injection molding, it is necessary to use a resin composition having high fluidity. However, in the resin composition of the present invention, the carbon material contains the high-conductive high crystalline artificial graphite as described above, and this requires only a small content thereof. Furthermore, the amount of the curing accelerator is made small. As a result, the progress of the curing reaction at a cylinder temperature is inhibited, which makes injection molding possible. One example of injection molding conditions is described below.

The cylinder temperature is set such that it gradually increases from under a hopper to a nozzle. The preset temperature under the hopper is preferably from 30 to 80°C, and more preferably from 40 to 60°C. When the temperature under the hopper is too high, the resin composition flows back in a cylinder at the time of injection molding to result in failure to fill the cavity of the mold in some cases. Furthermore, when the temperature under the hopper is too low, the resin composition transferred to a leading edge of the cylinder with a screw does not sufficiently melt to result in failure to fill the cavity of the mold due to poor fluidity in some cases. On the other hand, the temperature of the nozzle portion is preferably from 50 to 120°C, and more preferably from 70 to 100°C. When the temperature of the nozzle portion is too high, the epoxy resin cures in the cylinder to result in failure to inject the resin composition from the cylinder in some cases. Furthermore, when the temperature of the nozzle portion is too low, the resin composition does not sufficiently melt to result in failure to fill the cavity of the mold due to poor fluidity.

The mold temperature is preferably from 150 to 200°C, and more preferably from 160 to 190°C. When the mold temperature is too low, the conductive epoxy resin composition is poor in fluidity to cause the occurrence of the case where the cavity of the mold cannot be filled or to take a long period of time for curing. Furthermore, when the mold temperature is too high, the time from the start of injection into the mold to the stop of flow caused by curing becomes short, resulting in failure to fill the cavity of the mold with the conductive epoxy resin composition in some cases.

The injection pressure can be from 10 to 250 MPa, and the curing time can be from 20 seconds to 10 minutes. However, similar to the cylinder temperature and the mold temperature, conditions may be appropriately set depending on the kinds of epoxy resin, curing agent and curing accelerator used, the shape of fuel cell separator, and the like. It is also possible to perform cutting processing after molding as needed.

As described above, an important point of the present invention is that the specific artificial graphite and the specific epoxy resin are used, and in addition to this, further that the specific kind of the curing agent and the specific amount of the curing accelerator are used, and the resin composition obtained by mixing those is molded by injection molding. The results of consideration made by the present inventors on the reason why the resin composition excellent in conductivity, fluidity and strength characteristic is obtained by the above-mentioned specific composition are described below, but the present invention should not be understood to be limited to this consideration.

The artificial graphite powder is easily split by a shear action to form fine particles. Therefore, when used as the fuel cell separator, it is easily reduced in particle size by shear acting at the time of a kneading operation when producing the compound, transfer with the screw in the cylinder of the injection molding machine in molding, and filling in the mold. For this reason, breakage of conductive paths formed by the graphite particles becomes to easily occur. In the present invention, this is prevented by using the low crystalline artificial graphite having a large particle diameter.

Furthermore, the use of the low crystalline artificial graphite having a large particle diameter and the co-use of the epoxy resin or curing agent having low softening temperature decrease shear stress at the time of the above-mentioned kneading operation and injection molding, because of low viscosity of the resin composition. As a result, shear heat generation becomes difficult to occur. When heat generation occurs, the curing reaction proceeds, although the degree varies depending on the kind and the amount of the curing accelerator. As a result, the viscosity is further increased, which causes vicious cycle that the amount of shear heat generation increases to lead to further progress of the curing reaction. In particular, since crystals are not developed in the low crystalline artificial graphite as described above, the low crystalline artificial graphite itself has low conductivity. Therefore, in order to ensure the conductivity of the resin composition, it is necessary to add the low crystalline artificial graphite in large amount, and this is liable to induce the above-mentioned vicious cycle. The present invention prevents this by using the low softening temperature epoxy resin or curing agent.

In addition to the above, the present invention easily solves this problem by using the specific curing accelerator. When the specific curing accelerator is used, the curing reaction of the resin composition is hard to proceed at low temperature of about 100°C or lower which is assumed at the time of kneading or in the cylinder of injection molding. It becomes therefore possible to inhibit shear force to be loaded on the resin composition to minimize pulverization of the specific artificial graphite. Accordingly, when it is mixed with the resin, the conductive paths are easily formed, a pulverization state suitable for flow is obtained, and additionally it is possible to increase the amount of the resin.

That is, when a specific curing accelerator is used, the low crystalline artificial graphite is pulverized, and the conductive paths are hardly formed. However, by using a specific curing accelerator, the conductive paths are surely formed.

For example, the contents of consideration on the reason why the curing reaction is hard to proceed at low temperature of about 100°C or lower which is assumed at the time of kneading or in the cylinder of injection molding when the specific phosphorus compound is used are described below. The phosphorus compound melts to develop activity. Therefore, it is important to use the phosphorus compound having high melting temperature. The melting temperature, that is, a temperature at which activity develops, is proportional to the molecular weight of the phosphorus compound. When the molecular weight is low, activity develops at low temperature, and when the molecular weight is large, activity develops at high temperature. The phosphorus compound having the molecular weight of the above-mentioned preferred range hardly decomposes during the kneading step, and when heated to the mold temperature at the time of curing molding, the phosphorus compound rapidly melts to develop activity as the curing accelerator. Furthermore, the phosphorus compound represented by the above-mentioned formula (II) is an acid salt compound, and therefore dissociates into an acid salt group upon heating to form a low molecular weight compound having strong activity. Thereby, the curing reaction can be completed at high speed at the time of heating. Furthermore, the curing reaction is initiated after dissolution at the time of heating or after additional dissociation to the acid salt group. Therefore, the curing reaction is initiated through an induction period of a given time from the start of putting the material in the mold.

The contents of consideration on the reason why the curing reaction is hard to proceed at low temperature of about 100°C or lower which is assumed at the time of kneading or in the cylinder of injection molding when the salt of the diazabicyclo compound and the organic acid is used are described below. The salt of the diazabicyclo compound and the organic acid dissociates into the diazabicyclo compound as the curing accelerator and the organic acid upon heating. At this time, the decomposition temperature depends on the strength of the organic acid. When the acid dissociation constant is high, the salt decomposes at low temperature, and when the acid dissociation constant is low, the salt decomposes at high temperature. The salt of the organic acid having an acid dissociation constant within the above-mentioned preferred range and the diazabicyclo compound hardly dissociates during the kneading process, and rapidly decomposes into the organic acid and the diazabicyclo compound upon heating to the mold temperature at the time of curing and molding to develop activity of the diazabicyclo compound as the curing accelerator. The curing reaction is initiated after decomposition into the organic acid and the diazabicyclo compound, and as a result, the curing reaction is initiated through an induction period of a given time from the start of putting the material in the mold.

The contents of consideration on the reason why the curing reaction is hard to proceed at low temperature of about 100°C or lower which is assumed at the time of kneading or in the cylinder of injection molding when the specific urea derivative is used are described below. The urea compound is stably present at low temperature, but separates into an amine such as dimethylamine, and isocyanate upon heating. The amine separated and formed acts as the curing accelerator. This urea derivative is hardly separated during the kneading process, and rapidly decomposes into an amine and isocyanate upon heating to the mold temperature at the time of curing and molding to develop activity as the curing accelerator of the amine. The curing reaction is initiated after decomposition into the amine and the isocyanate, and as a result, the curing reaction is initiated through an induction period of a given time from the start of putting the material in the mold.

The contents of consideration on the reason why the curing reaction is hard to proceed at low temperature of about 100°C or lower which is assumed at the time of kneading or in the cylinder of injection molding when the specific imidazole compound is used are described below. In the imidazole having a molecular weight of 100 or more, the relative amount of a non-covalent electron pair acting as the curing accelerator in each molecule decreases, and the activity as curing accelerator is low. Therefore, the curing reaction does not proceed at low temperature to an extent which is assumed at the time of kneading or in the cylinder of injection molding. Furthermore, many imidazole compounds show crystallizability, and its melting point tends to be proportional to the molecular weight. The surface area of the imidazole compound decreases at a temperature lower than the melting temperature. As a result, the interface to the epoxy resin or the curing agent, which is the reaction site, decreases, thereby making further difficult to react. However, at the temperature equal to or higher than the melting temperature, curing reaction quickly occurs after melting. In particular, the imidazole compound containing an oxygen molecule has self-agglomerating property because of its polarity, and becomes difficult to dissolve in the epoxy resin and the curing agent until the specific temperature. The imidazole compound thus melts and then shows activity. Therefore, the curing reaction is initiated through an induction period of a given time from the start of putting the material in the mold.

The contents of consideration on the reason why the curing reaction is hard to proceed at low temperature of about 100°C or lower which is assumed at the time of kneading or in the cylinder of injection molding when the specific amine compound is used are described below. The amine compound having high molecular weight does not easily disperse in the epoxy resin or the curing agent, and this tendency is particularly increased at low temperature. For this reason, the curing reaction does not proceed at low temperature to an extent which is assumed at the time of kneading or in the cylinder of injection molding. On the other hand, the amine compound easily disperses in the epoxy resin or the curing agent at high temperature, and the curing reaction quickly proceeds. This tendency is strongly developed as the amine compound has higher molecular weight.

The contents of consideration on the reason why the curing reaction is hard to proceed at low temperature of about 100°C or lower which is assumed at the time of kneading or in the cylinder of injection molding when the curing accelerator is used in a specific amount are described below. The rate of the curing reaction increases as the addition amount of the curing accelerator increases. This tendency is the same even at low temperature of about 100°C or lower. When the amount of the curing accelerator added is limited to the specific amount, it is possible to inhibit the progress of the curing reaction at low temperature of about 100°C or lower.

The present inventors consider as above on the reason why the fuel cell separator according to the present invention shows high conductivity, but the invention is not limited to those considerations.

### EXAMPLES

The present invention will be illustrated in greater detail with reference to the following examples and comparative examples, but the invention should not be construed as being limited thereto.

### (Preparation of Salt of Diazabicyclo Compound and Organic Acid)

10 g of DBU (a special grade reagent manufactured by Nacalai Tesque, Inc.) was dissolved in 20 ml of dichloromethane to prepare a diazabicyclo compound solution. Separately, 10 g of orthophthalic acid (a special grade reagent manufactured by Nacalai Tesque, Inc.) or phenol novolak ("DL92" manufactured by Meiwa Plastic Industries, Ltd., softening point: about 90°C) was dissolved in 20 ml of dichloromethane to prepare an organic acid solution. The diazabicyclo compound solution and the organic acid solution were mixed at a predetermined ratio, followed by stirring for 5 minutes. Precipitated crystals were separated by filtration and washed with hexane, followed by drying to obtain a salt of DBU-orthophthalic acid or a salt of DBU-phenol novolak. The salt of DBU-orthophthalic acid was adjusted so as to be DBU:orthophthalic acid=152:166 (mass ratio), and the salt of DBU-phenol novolak was adjusted so as to be DBU:phenol novolak=30:70 (mass ratio).

### (Curing Accelerator Other Than Salt of Diazabicyclo Compound and Organic Acid)

The commercially available curing accelerator was directly used as the curing accelerator other than the salt of diazabicyclo compound and organic acid. That is, as indicated in the footnotes of Table 1, the urea derivative used was a product of Hodogaya Chemical Co., Ltd., triphenylphosphine used was a product manufactured by KI Chemical Industry Co., Ltd., the phosphorus compound used was a product manufactured by Hokko Chemical Industry Co., Ltd., the imidazole compound used was a product manufactured by Shikoku Chemicals Corporation, and the amine compound used was a special grade reagent manufactured by Nacalai Tesque, Inc..

### (Preparation of Carbon Material)

Low crystalline artificial graphite and needle artificial graphite were used as the carbon material. Low crystalline artificial graphite having an average particle diameter of 60 µm or more is hardly commercially available. Therefore, a graphite crucible (manufactured by Toyo Tanso Co., Ltd.) which is a molded article of an isotropic artificial graphite which is one kind of low crystalline artificial graphite was pulverized and was sieved with a mesh, and the resulting powder was used as a low crystalline artificial graphite. The crystal plane distance of the low crystalline artificial graphite was determined from a 2θ position of 002 plane peak which is the maximum peak observed in the vicinity of 2θ=25 to 30 deg at a step width of 0.01 deg and a scan speed of 0.3 sec/step using an X-ray diffractometer (manufactured by Rigaku Corporation). Furthermore, the average particle diameter of the low crystalline artificial graphite was measured using a laser diffraction type particle size distribution analyzer (manufactured by Shimadzu Corporation).

### (Preparation of Molding Material)

According to the formulations shown in Table 1, 500 g of the total of materials were preliminarily mixed in a 10 liters Henschel mixer, and then kneaded in a 1 liter pressure kneader at a chamber temperature of 100°C for 5 minutes. The ratios of epoxy resin/phenol novolak 1 as the curing agent, and epoxy resin/phenol novolak 2 as the curing agent are each 1:1 by equivalent ratio. The resulting product was pulverized with a pulverizer to particles having a particle diameter of about 2 mm to form a molding material, and the molding material was injection molded. Units of the formulations in Table 1 are expressed in % by mass.

### (Preparation of Molded Article)

Using a molding machine for thermosetting resins (manufactured by Hishiya Seiko Co., Ltd.) having a mold clamping force of 80 tons as an injection molding machine, the cylinder temperature was set to 50°C under a hopper, the nozzle temperature was set to 90°C, the mold temperature was set to 170°C, and the injection rate was set to 20 mm/sec. The curing time was appropriately set within a range of from 60 to 300 seconds, and the molding pressure was appropriately set within a range of from 30 to 70 MPa. Using this injection molding machine, the molding material was injection molded into a square thin tabular form having one side of 100 mm and a thickness of 2 mm. Cut processing was performed for the resulting molded article to form a test specimen.

### (Evaluation of Flexural Characteristic)

Flexural strength at room temperature was measured. The results obtained are shown in Table 1.

### (Demolding Time at 170°C)

The mold temperature at the time of injection molding was set to 170°C, and the minimum time in which the molded article can be taken out of the mold without breakage was taken as demolding time. The time was set from 60 second with the intervals of 30 seconds, and the maximum time was set to 300 seconds. The shorter demolding time means curing in a short period of time, so that the molding cycle is shorted, which is preferred. The results obtained are shown in Table 1.

### (Evaluation of Conductivity)

The resistance in a penetrating direction was measured by the method shown in Table 2 to make the evaluation of conductivity. A sample 21 was set between electrodes 23 with the interposition of carbon papers 22. The electric resistance was calculated from the current allowed to flow between the electrodes (measured with an ammeter 24) and the voltage between the carbon papers (measured with a voltmeter 25), and multiplied by the area of the sample to obtain the resistivity in the penetrating direction. The results obtained are shown in Table 1.

### (Evaluation of Fluidity)

In accordance with JIS-K-7199, using a capillary rheometer (Capillograph manufactured by Toyo Seiki Seisaku-sho Ltd.), the viscosity of the molding material at the time of 170°C and a shear rate of 1,000 sec⁻¹ before an increase of viscosity due to the curing reaction was observed was measured. The results obtained are shown in Table 1.

### (Measurement of Progress of Curing Reaction at 100°C)

Using a moving die rheometer (Monsanto MDR2000), changes in torque associated with the progress of curing reaction of the molding material at 100°C were measured. The measurement time was 10 minutes. An increase in torque indicates the progress of curing. The results obtained are shown in Table 1. In Table 1, for the case where an increase in torque was not observed, "good" is shown in a column of the heat stability, and for the case where an increase in torque was observed, "poor" was indicated therein.

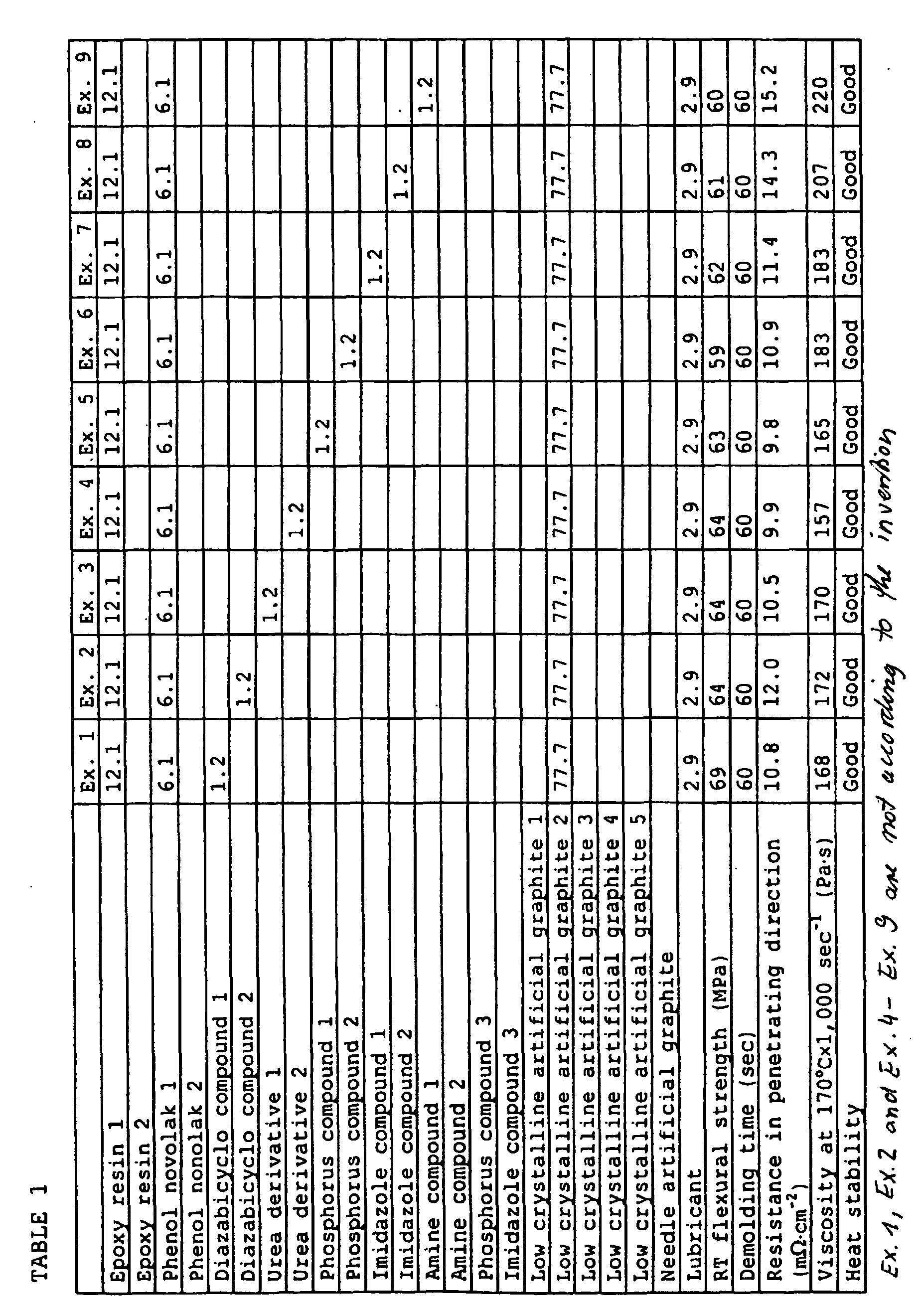

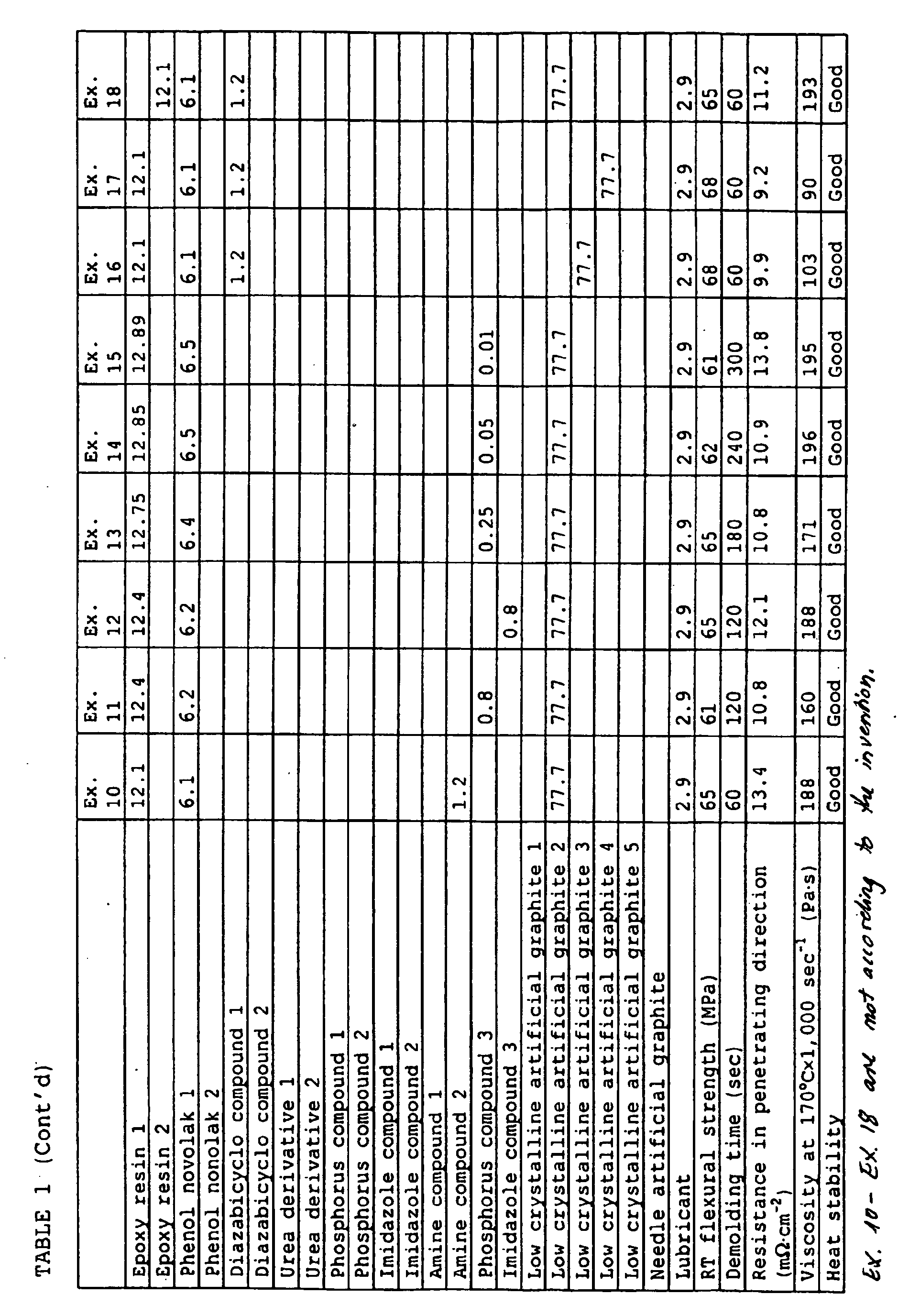

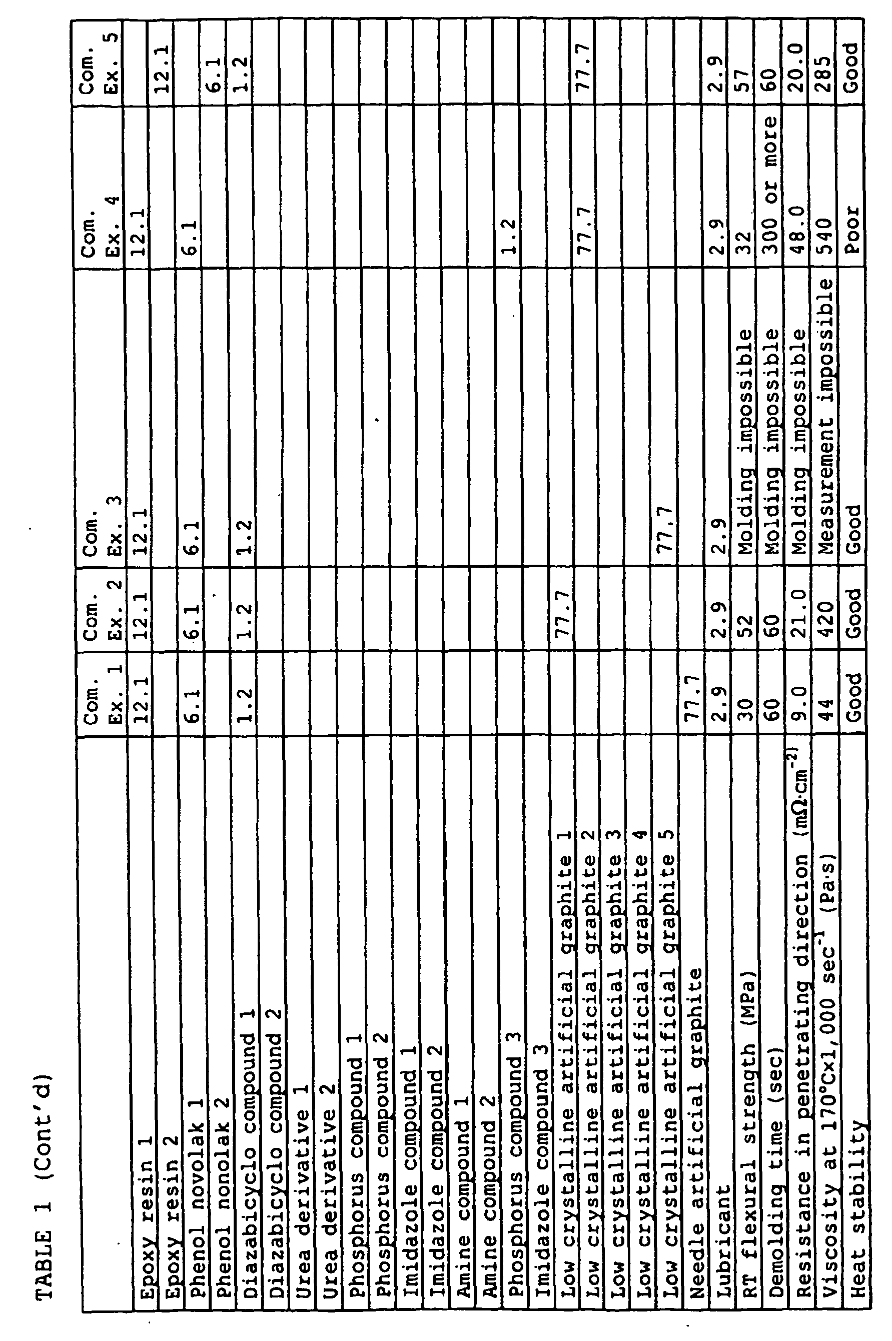

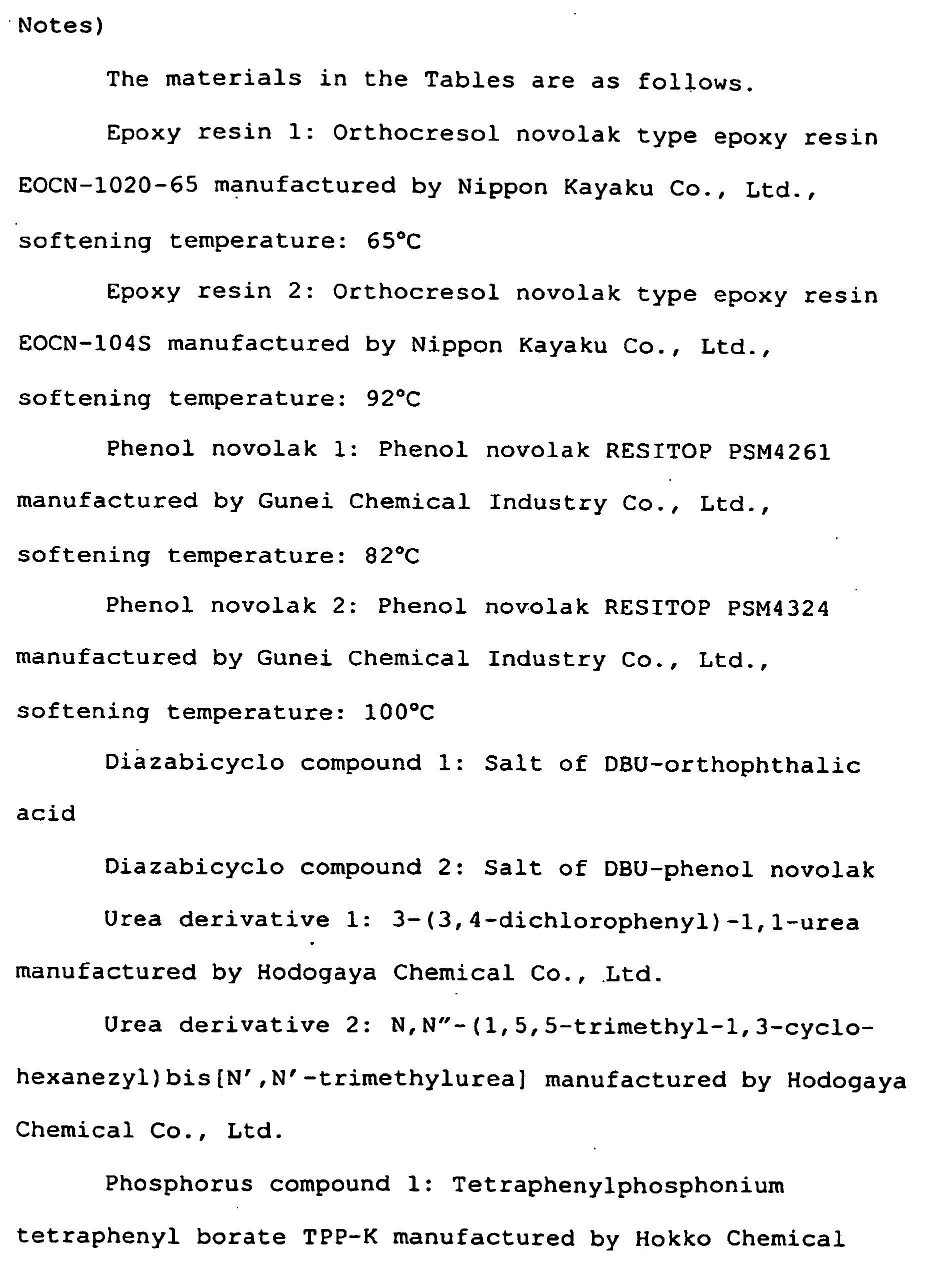

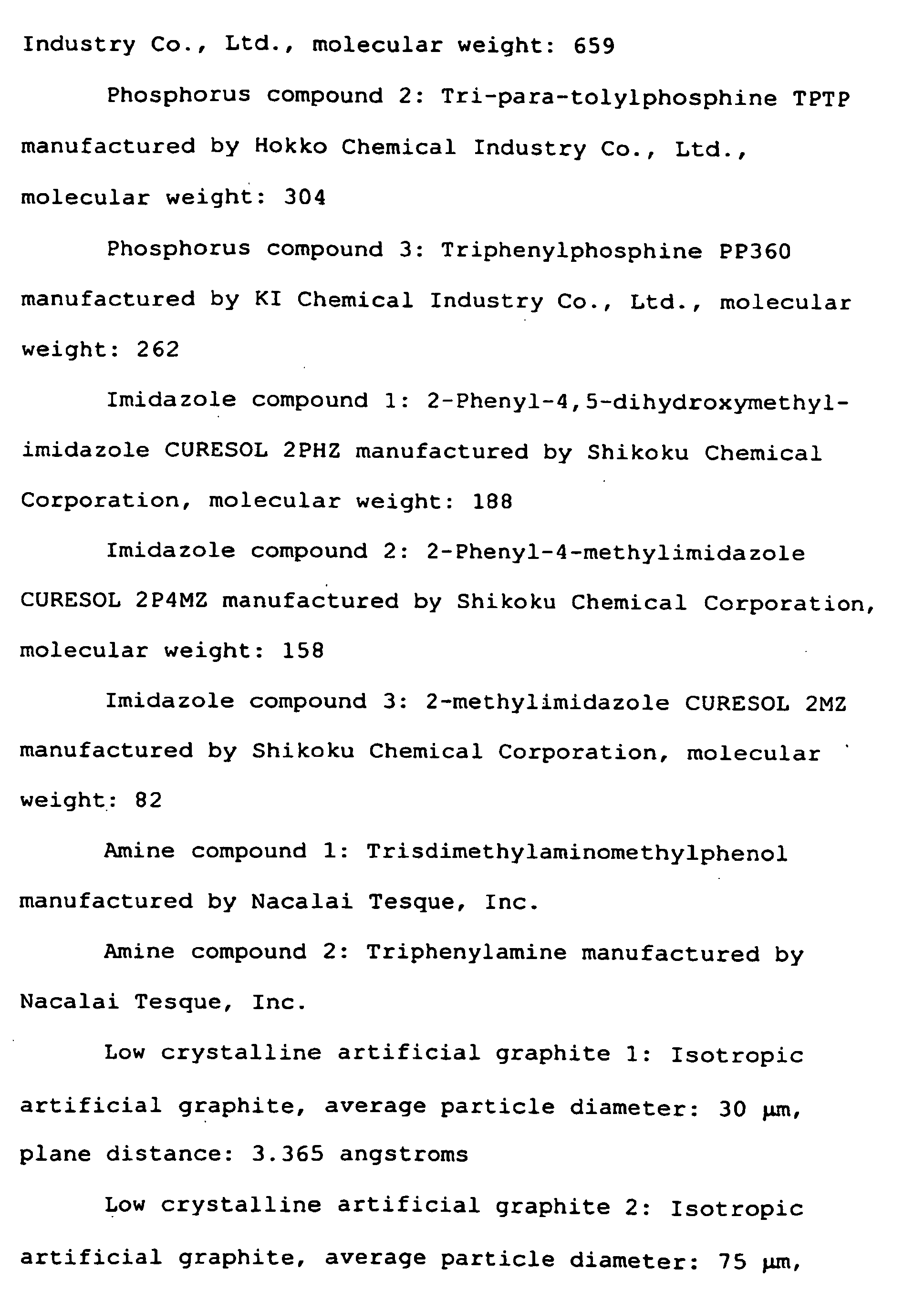

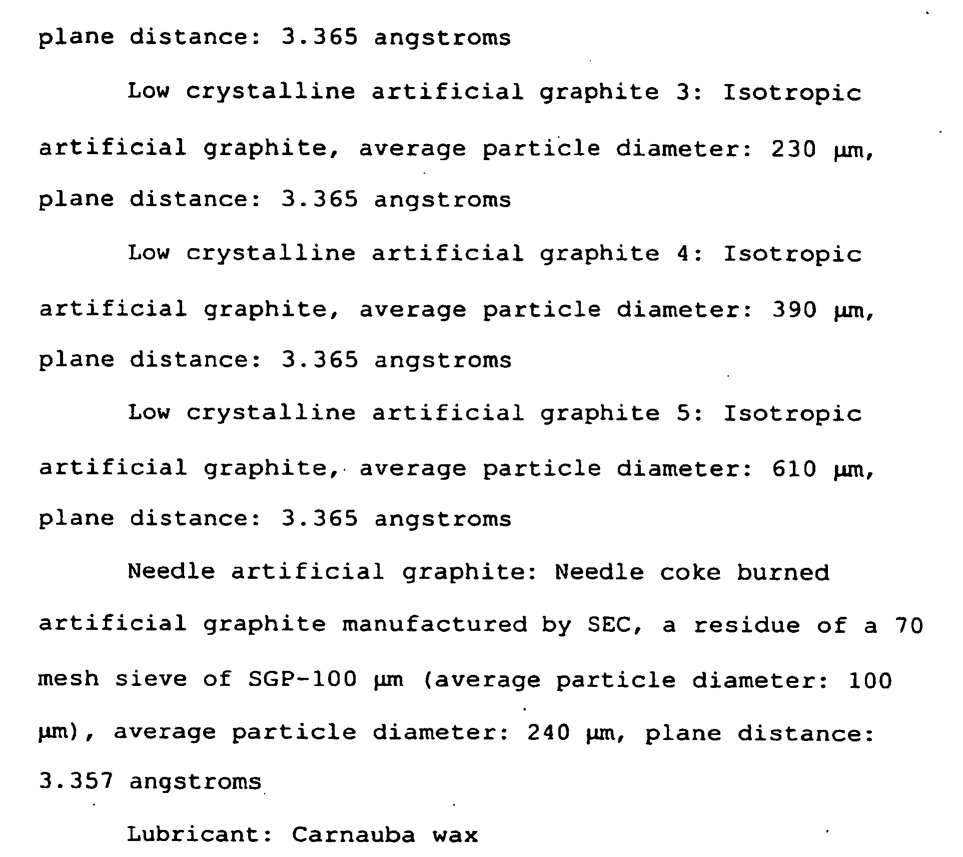

The respective Examples and Comparative Examples all use the orthocresol novolak type resin and the phenol novolak as the curing agent. However, Comparative Example 5 uses the orthocresol novolak type epoxy resin having a softening temperature of 92°C and the phenol novolak having a softening temperature of 100°C. As a result, moldability is poor and electric resistance is large. Furthermore, Comparative Example 1 uses the needle artificial graphite as the carbon material, and therefore, mechanical strength is low. Comparative Example 2 uses the low crystalline artificial graphite, but the average particle diameter is fine as 30 µm. Therefore, fluidity is low and conductive paths are difficult to be formed, resulting in high electric resistance. Comparative Example 3 uses the low crystalline artificial graphite having an excessively large average particle diameter of 610 µm. As a result, the molding material clogs a gate of a mold at the time of molding and a molded article cannot be obtained. As a result, a capillary of a capillary rheometer is also clogged, and the measurement of viscosity could not be performed. Comparative Example 4 uses the phosphorus compound having low molecular weight. Therefore, strength is low, moldability is poor and electric resistance is high.

Contrary to this, the molded article of each Example has small electric resistance and high strength, and the molding material has low viscosity. Therefore, it is possible to obtain the molded article by injection molding. Furthermore, the change in torque at 100°C is not almost generated within 10 minutes. As a result, the progress of curing reaction at 100°C is very slow, and heat stability is excellent.

As described above, it is apparent that the fuel cell separator having excellent conductivity, moldability and strength is obtained by the present invention.

## Claims

1. A resin composition for fuel cell separator, comprising:
(A) an epoxy resin;
(B) a curing agent;
(C) a curing accelerator; and
(D) a carbon material,
wherein the epoxy resin (A) or the curing agent (B) has a softening temperature of from 40 to 90° C, the curing accelerator (C) is a urea derivative represented by the formula: X-NH-CO-NYZ, wherein X is one member selected from the group consisting of a saturated or unsaturated alkyl group, a derivative thereof, an aryl group and a derivative thereof; and Y and Z which may be the same or different represent a saturated or unsaturated alkyl group, and
wherein the carbon material (D) comprises a low crystalline artificial graphite having an average particle diameter of from 70 to 500 µm in an amount of from 5 to 100% by mass of the carbon material (D) and the content of the carbon material is from 35 to 85% by mass based on the total amount of the resin composition, and wherein the softening temperature is measured in accordance with JIS K 7234.

2. The resin composition as claimed in claim 1, wherein the content of the curing agent (B) is from 0.8 to 1.2 equivalents per one epoxy group of the epoxy resin (A) and the content of the curing accelerator ( C) is from 0.01 to 10 parts by mass per 100 parts by mass of the curing agent (B).

3. The resin composition as claimed in claim 1 or 2, wherein the carbon material (D) has a crystal plane distance of from 0.3362 to 0.3390 nm.

4. The resin composition as claimed in any one of claims 1 to 3, wherein the curing agent (B) has at least two phenolic hydroxyl groups in the molecule.

5. The resin composition as claimed in any one of claims 1 to 4, wherein the epoxy resin (A) is a multifunctional epoxy resin.

6. A fuel cell separator obtained by injection molding the resin composition for fuel cell separator as claimed in any one of claims 1 to 5.

## Patentansprüche

1. Harzzusammensetzung für Brennstoffzellenseparator, umfassend:
(A) ein Epoxidharz;
(B) ein Vernetzungsmittel;
(C) einen Vernetzungsbeschleuniger; und
(D) ein Kohlenstoffmaterial,
wobei das Epoxidharz (A) oder das Vernetzungsmittel (B) eine Erweichungstemperatur von 40 bis 90°C besitzt, der Vernetzungsbeschleuniger (C) ein Harnstoffderivat, dargestellt durch die Formel: X-NH-CO-NYZ ist, wobei X ein Bestandteil, ausgewählt aus der Gruppe bestehend aus einer gesättigten oder ungesättigten Alklygruppe, einem Derivat davon, einer Arylgruppe und einem Derivat davon ist; und Y und Z, die gleich oder unterschiedlich sein können, stellen eine gesättigte oder ungesättigte Alkylgruppe dar, und
wobei das Kohlenstoffmaterial (D) einen niedrig kristallinen künstlichen Graphit mit einem durchschnittlichen Teilchendurchmesser von 70 bis 500 µm in einer Menge von 5 bis 100 Gew.-% des Kohlenstoffmaterials (D) umfasst und der Gehalt des Kohlenstoffmaterials von 35 bis 85 Gew.-% beträgt, basierend auf der Gesamtmenge der Harzzusammensetzung, und worin die Erweichungstemperatur gemäß JIS K 7234 gemessen ist.

2. Harzzusammensetzung nach Anspruch 1, wobei der Gehalt des Vernetzungsmittels (B) von 0,8 bis 1,2 Äquivalente pro Epoxidgruppe des Epoxidharzes (A) beträgt und der Gehalt des Vernetzungsbeschleunigers (C) von 0,01 bis 10 Gew.-Teilen pro 100 Gewichtsteile des Vernetzungsmittels (B) beträgt.

3. Harzzusammensetzung nach Anspruch 1 oder 2, wobei das Kohlenstoffmaterial (D) einen Gitterebenenabstand von 0,3362 bis 0,3390 nm besitzt.

4. Harzzusammensetzung nach einem der Ansprüche 1 bis 3, wobei das Vernetzungsmittel (B) mindestens zwei phenolische Hydroxylgruppen im Molekül besitzt.

5. Harzzusammensetzung nach einem der Ansprüche 1 bis 4, wobei das Epoxidharz (A) ein multifunktionales Epoxidharz ist.

6. Brennstoffzellenseparator, erhalten durch Spritzgießen der Harzzusammensetzung für Brennstoffzellenseparator nach einem der Ansprüche 1 bis 5.

## Revendications

1. Composition de résine pour séparateur de pile à combustible comprenant :
(A) une résine époxyde ;
(B) un agent de durcissement ;
(C) un accélérateur de durcissement ; et
(D) un matériau carboné,
où la résine époxyde (A) ou l'agent de durcissement (B) a une température de ramollissement de 40 à 90°C, l'accélérateur de durcissement (C) est un dérivé de l'urée représenté par la formule : X-NH-CO-NYZ où X est un membre choisi dans le groupe consistant en un groupe alkyle saturé ou insaturé, un dérivé de celui-ci, un groupe aryle et un dérivé de celui-ci ; et Y et Z qui peuvent être identiques ou différents représentent un groupe alkyle saturé ou insaturé, et
où le matériau carboné (D) comprend un graphite artificiel faiblement cristallin ayant un diamètre de particule moyen de 70 à 500 µm en une quantité de 5 à 100 % en masse du matériau carboné (D) et la teneur du matériau carboné est de 35 à 85 % en masse sur la base de la quantité totale de la composition de résine, et où la température de ramollissement est mesurée selon JIS K 7234.

2. Composition de résine selon la revendication 1 où la teneur de l'agent de durcissement (B) est de 0,8 à 1,2 équivalent par groupe époxyde de la résine époxyde (A) et la teneur de l'accélérateur de durcissement (C) est de 0,01 à 10 parties en masse pour 100 parties en masse de l'agent de durcissement (B).

3. Composition de résine selon la revendication 1 ou 2 où le matériau carboné (D) a une distance entre les plans cristallins de 0,3362 à 0,3390 nm.

4. Composition de résine selon l'une quelconque des revendications 1 à 3 où l'agent de durcissement (B) a au moins deux groupes hydroxyle phénoliques dans la molécule.

5. Composition de résine selon l'une quelconque des revendications 1 à 4 où la résine époxyde (A) est une résine époxyde multifonctionnelle.

6. Séparateur de pile à combustible obtenu par moulage par injection de la composition de résine pour séparateur de pile à combustible selon l'une quelconque des revendications 1 à 5.
